# EUROPÄISCHE PATENTANMELDUNG

(11) **EP 0 930 181 A1**
(43) Veröffentlichungstag der Anmeldung: **21.07.1999**
(21) Anmeldenummer: 99810027.5
(22) Anmeldetag: 15.01.1999
(51) Int. Cl.: B60G 5/04, B60G 17/005, B60G 21/067, B62D 61/12

(54) **Tandem-radanordnung für Anhängerfahrzeuge**

(30) Priorität: 15.01.1998 CH 8998
(71) Anmelder: Bafi, Balmer U., 8604 Volketswil (CH)
(72) Erfinder: Balmer, Urs, 8604 Volketswil (CH)
(74) Vertreter: Gachnang, Hans Rudolf

(57) **Zusammenfassung**

Die beiden Schwingen (3,5) der Tandem-Radanordnung eines Anhängerfahrzeuges sind durch eine Kolben/Zylindereinheit (27) miteinander verbunden. Durch Einziehen des Kolbens (28) in der Kolben/Zylindereinheit (27) und das damit verbundene Verkürzen des Abstands zwischen den beiden Anlenkköpfen (23,25) an den Hebelarmen (19,21) wird das hintere Rad (3) bis zum Anschlag (35) angehoben und die das vordere Rad (11) tragende Schwinge (3) wird im Uhrzeigersinn gedreht und hebt das Anhängerfahrzeug soweit an, bis das hintere Rad (13) nicht mehr auf dem Boden aufliegt. Es kann auch durch Ausfahren des Kolbens (28) das vordere Rad (11) angehoben und das hintere Rad (13) abgesenkt werden.

## Beschreibung

Gegenstand der Erfindung ist eine Tandem-Radanordnung für Anhängerfahrzeuge gemäss Oberbegriff des Patentanspruchs 1.

Grössere Wohnwagen oder andere für Sport- oder Gewerbezwecke benutzte Anhänger für Personenwagen werden meist mit Tandem-Radanordnungen versehen, um die Achslast besser zu verteilen und die Deichsellast zu verringern. Im Fahrbetrieb weisen solche Tandem-Radanordnungen keine Nachteile auf. Diese treten aber zu Tage, wenn das Anhängerfahrzeug in engen Radien manövriert werden muss. Ganz besonders nachteilig sind solche Tandem-Radanordnungen wenn beispielsweise Wohnwagen oder Anhängerfahrzeuge von Hand in beengten Platzverhältnissen manövriert werden müssen, weil die beiden jeweils hintereinanderliegenden Räder ein Drehen des Fahrzeuges sehr stark erschweren.

Aufgabe der vorliegenden Erfindung ist die Schaffung einer Tandem-Radanordnung, welche das Manövrieren des Anhänger-Fahrzeuges sowohl in angehängtem Zustand mit dem Zugfahrzeug als auch von Hand sehr stark erleichtert.

Gelöst wird diese Aufgabe durch eine Tandem-Radanordnung gemäss den Merkmalen des Patentanspruchs 1.

Es gelingt mit der erfindungsgemässen Tandem-Radanordung auf kostengünstige Weise zum Zwecke des Manövrierens ein Radpaar vom Boden abzuheben und auf diese Weise den Widerstand beim seitlichen Auslenken des Anhängerfahrzeuges aufzuheben. Als Betätigungsvorrichtung zum Anheben des einen Radpaares sind jeweils die Schwingen der beiden hintereinander laufenden Räder durch eine Kolben/Zylindereinheit, welche mit einem Fluidum betätigbar sind, verbunden. Im Fahrzugstand wird die Kolben/Zylindereinheit drucklos gefahren und die unterschiedlichen Einschwingungen der einzelnen Räder wird durch Verschieben des Kolbens im Zylinder im wesentlichen widerstandsfrei übernommen. Zum Anheben des einen Rades wird die Kolbenstange in den Zylinder eingefahren und dadurch das eine Rad nach oben und das andere nach unten bewegt. Die Betätigung der Kolben/Zylindereinheiten erfolgt durch eine Hydraulik- oder Luftpumpe, die am Anhängerfahrzeug befestigt und über Batteriestrom des Zugfahrzeuges oder des Anhängerfahrzeugs (Wohnwagen) betätigt werden kann.

Anhand eines illustrierten Ausführungsbeispieles wird die Erfindung näher erläutert. Es zeigen
- Figur 1: eine schematische Seitenansicht einer Tandem-Radanordnung an einem Anhängerfahrzeug in Fahrstellung,
- Figur 2: die Tandem-Radanordnung in Manövrierstellung.

Am Träger 1 eines Wohnwagen- oder Anhängerunterbaus sind ein vorderes Schwingenpaar 3 und ein hinteres Schwingenpaar 5 schwenkbar an einer Drehachse 7 bzw. 9 gefedert gelagert. Die Federung erfolgt über Gummi- oder Torsionsfedern in den Drehachsen 7,9, wie sie im Anhängerbau üblich sind.

Die Achsen 7 und 9 können als Achsstummel ausgebildet sein, welche die Träger 3 fliegend überragen, oder es können durchgehende Achsrohre vorhanden sein, welche die beiden nebeneinanderliegenden Räder 11,13, von denen jeweils nur eines, das von der Seite sichtbare, dargestellt ist, tragen. Die beiden Schwingen 3 und 5 sind als zweiarmige Hebel ausgebildet. Die unteren Hebelarme 15,17 tragen an deren Enden die Räder 11,13. An deren oberen und zudem kürzeren Hebelarmen 19,21 sind Gelenkköpfe 23,25 ausgebildet. Zwischen den Gelenkköpfen 23,25 ist eine Kolben/Zylindereinheit 27 mit einem Kolben mit Kolbenstange 28 eingesetzt. Diese Kolben/Zylindereinheit 27 ist nur an den beiden Anlenkpunkten, nämlich den Gelenkköpfen 23 und 25, befestigt. Sie wird durch zwei Speiseleitungen 29 und 31 mit einer Hydraulikpumpe oder bei Verwendung von Luft als Druckmedium mit einer Luftpumpe (beide nicht dargestellt) verbunden. Die Speiseleitung 29 stellt die Druckseite des Systems dar. Zwei Puffer 33,35 begrenzen den Drehweg der zweiarmigen Hebel 3,5 und verhindern, dass die Räder 11,13 am Unterbau des Anhängerfahrzeuges anschlagen können, wenn eine zu hohe statische oder dynamische Last auf das Fahrwerk einwirkt.

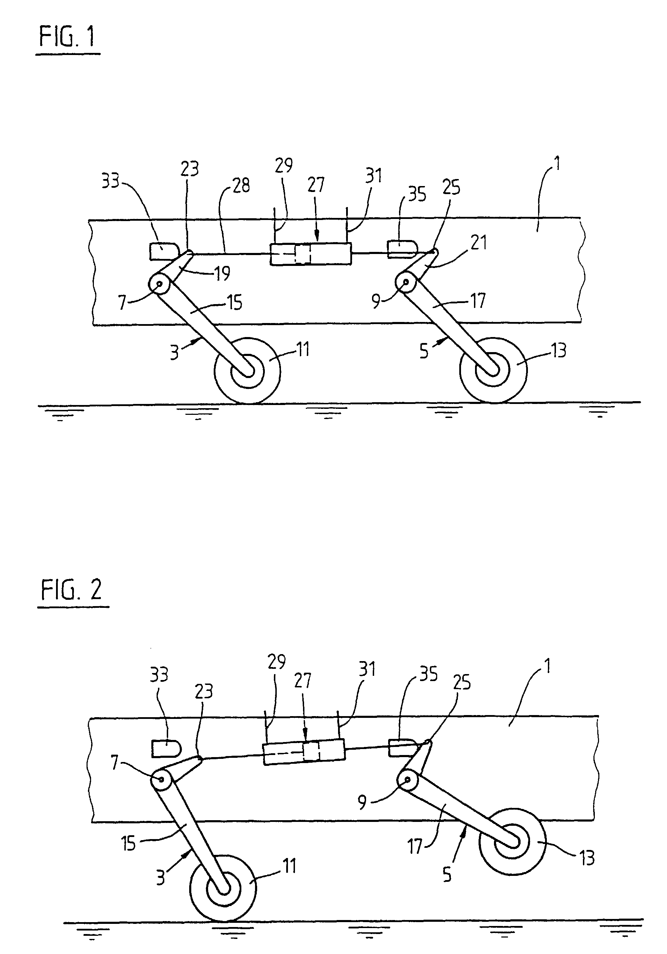

Soll nun das Anhängerfahrzeug auf engem Raum manövriert werden, vor allem durch Rückwärtsfahren oder aber auch losgelöst vom Zugfahrzeug von Hand, so wird vorerst durch die Druckleitung 29 ein Fluidum, Öl oder Luft, in die Kolben/Zylindereinheit 27 eingepresst. Dadurch werden die beiden Schwingen 3,5 an den Anlenkköpfen 23,25 der Hebelarme 19,21 zusammengezogen. Durch die Verkürzung des Abstandes zwischen den beiden Anlenkköpfen 23,25 gelangt der kürzere Hebel 21 der hinteren Schwinge 5 rasch in Anlage mit dem Puffer 35. Danach wird die vordere Schwinge 3 im Uhrzeigersinn weitergeschwenkt und hebt dadurch den Aufbau des Anhängerfahrzeuges an. Gleichzeitig hebt sich auch das hintere Rad 13 vom Boden ab (in Figur 2 übertrieben dargestellt). Nun verhält sich das Anhängerfahrzeug wie ein Einachsfahrzeug und lässt sich folglich mühelos und ohne Seitenkräfte auf kleinstem Raum an Ort im Kreis drehen und manövrieren.

Alternativ kann die Speiseleitung 31 mit einem Druckmedium beaufschlagt werden. Dann wird die vordere Schwinge 3 gegen den Puffer 33 gedrückt und die hintere Schwinge 5 im Uhrzeigersinn geschwenkt, bis das vordere Rad 11 abgehoben hat.

## Patentansprüche

1. Tandem-Radanordnung für Anhängerfahrzeuge, mit einem vorderen, an einem vorderen Schwingenpaar befestigten Radpaar und einem hinteren, an einem hinteren Schwingenpaar befestigten Radpaar, einer vorderen gefederten Achse und einer hinteren gefederten Achse, dadurch gekennzeichnet, dass die vorderen Schwingen (3) mit den hinteren Schwingen (5) durch je eine Kolben/Zylindereinheit (27) miteinander verbunden und durch Ein- oder Ausfahren der Kolbenstange (28) die vertikale Lage des vorderen Radpaares (11) bezüglich des hinteren Radpaares (13) höhenverstellbar ist.

2. Tandem-Radanordnung nach Anspruch 1, dadurch gekennzeichnet, dass die Schwingen (3,5) als zweiarmige Hebel ausgebildet sind, bei denen der untere Hebel (15,17) je ein Rad (11,13) trägt und die oberen Hebel (19,21) deren freie Enden Anlenkköpfe (23,25) aufweisen, an denen die Kolben/Zylindereinheit (27) zwischen den Anlenkköpfen (23,25) liegend befestigt ist.

3. Tandem-Radanordnung nach Anspruch 2, dadurch gekennzeichnet, dass die Kolben/Zylindereinheit (27) im Fahrzustand drucklos ist.

4. Tandem-Radanordnung nach einem der Ansprüche 1 bis 3, dadurch gekennzeichnet, dass die Kolben/Zylindereinheit (27) von einer auf dem Zugfahrzeug oder dem Anhängerfahrzeug angeordneten Pumpe gespeist wird.
